## Europäisches Patentamt
## European Patent Office
## Office européen des brevets

(19)

(11) **EP 1 255 175 A1**

(12) **DEMANDE DE BREVET EUROPEEN**

(43) Date de publication:
**06.11.2002 Bulletin 2002/45**

(51) Int Cl.$^7$: **G05B 13/02**, B60K 6/04,
B60L 11/12, F16H 61/00,
B60K 41/00

(21) Numéro de dépôt: 02291060.8

(22) Date de dépôt: **26.04.2002**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **04.05.2001 FR 0106003**

(71) Demandeur: **Renault s.a.s.**
**92100 Boulogne Billancourt (FR)**

(72) Inventeurs:
• **Royer, Laurent**
**92120 Montrouge (FR)**
• **Von Wissel, Dirk**
**92200 Neuilly-sur-Seine (FR)**
• **Spoormans, Thomas**
**92100 Boulogne Billancourt (FR)**

(54) **Procédé de synthése d'un loi de commande d'une transmission infiniment variable pour vehicule automobile.**

(57)      L'invention concerne un procédé de synthèse d'une loi de commande d'une transmission infiniment variable d'un groupe motopropulseur de véhicule, comprenant une chaîne cinématique et un variateur à deux machines électriques reliées à une batterie, tel que, ladite loi étant déterminée par un calculateur (10) pour être délivrée aux trois contrôleurs (9) pilotant le moteur thermique (1) et les machines électriques ($3_1$, $3_2$) de la transmission, il comprend notamment :

-      une modélisation du comportement dynamique du groupe motopropulseur selon un modèle dynamique linéaire invariant dans le temps, pour délivrer le couple ($T_{pt}$) formé par la transmission aux roues, le couple ($T_{ice}$) et le régime ($\omega_{ice}$)du moteur thermique ;

-      une correction dudit modèle linéaire du groupe motopropulseur par introduction des incertitudes sur la transmission et sur le véhicule ;

-      un calcul d'un régulateur robuste en performances qui stabilise tous les systèmes décrits par ledit modèle corrigé.

FIG_1

EP 1 255 175 A1

**Description**

La présente invention concerne un procédé de synthèse d'une loi de commande des organes d'une transmission infiniment variable, dans un véhicule automobile, dans le but d'assurer un asservissement robuste des consignes. Cette commande doit présenter des propriétés de robustesse aux perturbations des commandes, aux bruits de mesure, aux erreurs de modélisation, aux saturations des actionneurs et aux commutations de régulateurs.

Dans un véhicule, la transmission a pour but d'accorder la puissance développée par le moteur thermique à la vitesse de rotation des roues. Parmi les transmissions à changement de rapport automatique, l'invention s'applique aux transmissions infiniment variables, sans convertisseur assurant le couplage entre le moteur et la transmission. Elles permettent de faire varier le rapport entre deux bornes minimale et maximale et même de réaliser le rapport infini, c'est-à-dire que pour un régime moteur non nul, le régime des roues peut être nul. Ce type de transmission ne nécessite pas de système d'accouplement, tel un embrayage, pour démarrer le moteur thermique ou pour changer la direction de propulsion du véhicule, puisqu'elle permet aussi de réaliser le rapport nul.

La commande proposée par l'invention concerne une transmission infiniment variable, disposant d'un variateur électrique, composé de deux machines électriques pouvant fonctionner comme générateurs ou comme moteurs, également liées à une batterie rendant la propulsion hybride et diminuant donc les émissions de polluants.

Dans une couche haute de commande, les points de fonctionnement des différents organes sont choisis dans le but d'assurer un certain couple aux roues tout en minimisant la consommation de carburant. Une couche basse, appelée commande d'organes doit assurer l'asservissement des consignes fournies par la couche haute, de façon robuste, ce qui signifie que la qualité d'asservissement doit être invariante vis-à-vis des perturbations, des dynamiques négligées et des incertitudes paramétriques.

Le deuxième objectif de la loi de commande synthétisée selon l'invention est la prise en compte des limitations des organes pour assurer l'asservissement des consignes quand ces limitations sont atteintes.

Pour cela, l'objet de l'invention est un procédé de synthèse d'une loi de commande d'une transmission infiniment variable d'un groupe motopropulseur de véhicule automobile, à dérivation de puissance du moteur thermique vers les roues en une première voie comprenant une chaîne cinématique et une seconde voie comportant un variateur à deux machines électriques reliées à un élément de stockage de l'énergie électrique, caractérisé en ce que, ladite loi étant implantée dans une unité centrale électronique de type superviseur à trois niveaux de commande pour être délivrée aux trois calculateurs de contrôle qui pilotent le moteur thermique et les machines électriques de la transmission, il comprend les phases suivantes :

- modélisation du comportement dynamique du groupe motopropulseur et du véhicule selon un modèle dynamique linéaire invariant dans le temps, recevant en entrée les trois commandes en couple ($T_{ice}^{\#}$, $T_{e1}^{\#}$ et $T_{e2}^{\#}$) des trois actionneurs et ayant comme états le couple ($T_{ice}$) et le régime ($\omega_{ice}$) du moteur thermique et le régime ($\omega_r$) des roues, pour délivrer le couple ($T_{pt}$) fourni par la transmission aux roues, le couple ($T_{ice}$) et le régime ($\omega_{ice}$) du moteur thermique ;
- correction du modèle linéaire du groupe motopropulseur par introduction des incertitudes dynamiques du moteur thermique et des machines électriques et des incertitudes paramétriques sur la résistance à l'avancement et sur la masse du véhicule ;
- calcul par la méthode de minimisation d'une norme H∞ , d'un régulateur robuste en performances qui stabilise tous les systèmes décrits par ledit modèle avec incertitudes.

Selon une autre caractéristique du procédé de synthèse, la modélisation du comportement dynamique du groupe motopropulseur comporte les étapes suivantes :

- modélisation de la réponse en couple ($T_{ice}$) à la commande de couple ($T_{ice}^{\#}$) délivrée par le régulateur ;
- modélisation des réponses en couple ($T_{e1}$ et $T_{e2}$) aux commandes de couples ($T_{e1}^{\#}$ et $T_{e2}^{\#}$) ;
- modélisation de la puissance de la batterie ;
- modélisation du comportement dynamique longitudinal du véhicule ;
- modélisation de la chaîne cinématique, considérée comme un système à quatre branches reliant le moteur thermique défini par son couple ($T_{ice}$) et son régime ($\omega_{ice}$), les deux machines électriques, définies par leurs couples ($T_{e1}$ et $T_{e2}$) et leurs régimes ($\omega_{e1}$ et $\omega_{e2}$) respectivement, et les roues définies par le couple ($T_{pt}$) fourni à la transmission et leur vitesse de rotation ($\omega_r$) ;
- calcul du modèle dynamique linéaire invariant dans le temps du groupe motopropulseur.

D'autres caractéristiques et avantages de l'invention apparaîtront à la lecture de la description d'un exemple non limitatif de réalisation d'un régulateur de commande d'une transmission infiniment variable, illustrée par les figures suivantes, qui sont :

- figure 1 : le schéma d'un groupe motopropulseur hybride à dérivation de puissance, piloté par un superviseur à quatre niveaux de commande selon l'invention ;
- figure 2: le schéma électronique du système à contrôler par le régulateur de commande selon l'invention ;
- figure 3 : le schéma du modèle linéaire du groupe motopropulseur, commandé par un régulateur selon l'invention, dans une structure de retour d'erreur ;
- figure 4 : la représentation d'un modèle incertain du moteur thermique ;
- figure 5: la représentation d'un modèle incertain des machines électriques du variateur ;
- figure 6 : la représentation d'un modèle incertain de l'expression du couple de résistance à l'avancement d'un véhicule ;
- figure 7 : la représentation d'un modèle incertain de la transmission hybride à dérivation de puissance ;
- figure 8 : le schéma électronique du système à contrôler par le régulateur de commande selon l'invention, à partir des modèles incertains des organes ;
- figure 9 : un schéma de prise en compte des saturations des commandes du système par le régulateur ;
- figures 10A, 10B, 10C : les limitations des couples appliqués par les trois actionneurs de la transmission, en fonction de leurs régimes respectifs ;
- figure 11 : l'espace de commande admissible *H*, défini par les trois commandes ;
- figure 12 : le schéma d'une structure de la compensation statique des saturations des actionneurs ;
- figure 13 : une structure de commande avec plusieurs régulateurs montés en parallèle ;
- figure 14 : un schéma de structure de commande à deux régulateurs commutables, avec compensation des saturations et du transfert de régulateur.

Les éléments portant les mêmes références dans les différentes figures remplissent les mêmes fonctions en vue des mêmes résultats.

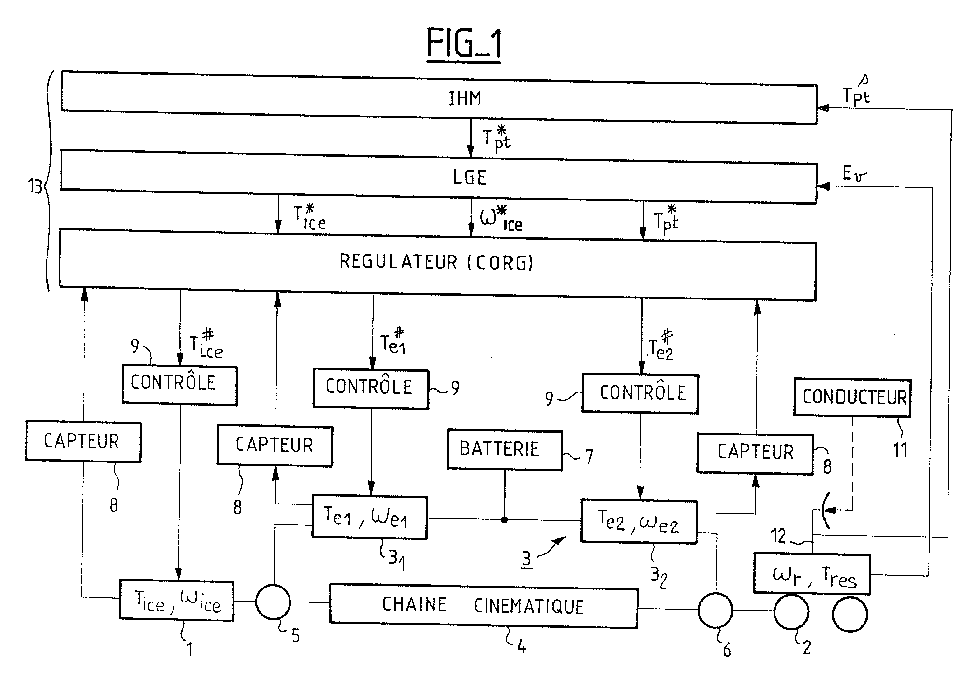

L'élément principal de la transmission est le variateur qui fournit un rapport variable entre l'axe d'entrée propulsé par le moteur thermique et l'axe de sortie entraînant les roues. Un variateur électrique ayant un rendement mécanique inférieur à celui d'une transmission à rapports fixes, une solution consiste à choisir une transmission à dérivation de puissance, caractérisée par une séparation de la puissance fournie par le moteur thermique en deux voies distinctes comme le montre le schéma de la figure 1. Une première voie reliant le moteur 1 aux roues 2 du véhicule 10 passe par un variateur 3 électrique et une deuxième voie passe par une chaîne cinématique 4. La division de la puissance du moteur peut être faite par un train épicycloïdal 5, et la réunion de la puissance des deux voies pour propulser l'axe des roues peut aussi être faite par un autre train épicycloïdal 6. Dans la deuxième voie, le rendement est élevé mais le rapport est fixe, cependant l'ensemble de la transmission est variable, car le rapport de la première voie est variable, et son rendement est potentiellement bon. Plusieurs modes de réalisation de ce type de transmission sont décrits dans la demande de brevet français, déposée sous le n°00-16526 au nom de RENAULT.

Plus précisément, la transmission commandée selon l'invention concerne un groupe motopropulseur hybride à dérivation de puissance, comportant un variateur électrique 3 et un élément de stockage de l'énergie, de type batterie 7 par exemple. Les deux machines électriques $3_1$ et $3_2$ du variateur 3 peuvent être utilisées pour décélérer le véhicule et effectuer ainsi du freinage récupératif. L'objectif de la commande d'un véhicule équipé d'un groupe motopropulseur hybride tel que décrit précédemment est de satisfaire la demande de couple aux roues et de vitesse du véhicule formulée par le conducteur, avec un maximum d'agrément de conduite et un minimum de consommation de carburant.

Pour réaliser cet objectif, quatre couches ou niveaux, de commande sont définies, appelées de la plus haute à la plus basse, comme le montre le schéma de la figure 1 :

- l'interface Homme-Machine (IHM)
- la loi de gestion d'énergie (LGE)
- la commande d'organes (CORG)
- les calculateurs de contrôle de chaque organe.

Les trois premiers niveaux sont réalisés dans une unité centrale électronique 13, de type superviseur, qui reçoit des informations sur la demande de couple $T_{pt}{}^s$ souhaitée par le conducteur 11, à partir de l'enfoncement des pédales 12 d'accélérateur et de frein, ainsi que sur les actionneurs du groupe motopropulseur, à partir notamment de capteurs qui leur sont associés. Ce superviseur pilote électroniquement les organes de la transmission infiniment variable, en leur délivrant des signaux de commande.

L'interface Homme-Machine (IHM) traduit la demande du conducteur en signaux utilisables pour le pilotage automatique du système. Ainsi, les angles des pédales de frein et d'accélérateur, sur lesquelles agit le conducteur, sont les entrées de l'interface IHM qui délivre en sortie une valeur de couple de référence aux roues, $T_{pt}{}^*$.

Dans un groupe motopropulseur hybride à dérivation de puissance, la puissance mécanique demandée par le conducteur est fournie par la batterie à travers les deux machines électriques et/ou par la combustion de carburant dans le moteur thermique. C'est la loi de gestion d'énergie (LGE) qui répartit la puissance demandée entre la puissance électrique et la puissance du moteur thermique, en choisissant les points de fonctionnement qui minimisent la consommation d'énergie tout en assurant le suivi du couple de référence $T_{pt}^*$ délivré par l'interface (IHM).

La loi de gestion de l'énergie (LGE) reçoit d'une part cette référence de couple $T_{pt}^*$ et d'autre part toutes les informations $E_v$ sur l'état du véhicule, pour délivrer trois signaux de consigne exprimant la répartition de puissance choisie par un point de fonctionnement du moteur thermique et le couple de référence $T_{pt}^*$ reçu de l'interface Homme-Machine (IHM).

Le point de fonctionnement du moteur thermique est représenté par le régime désiré $\omega_{ice}^*$ du moteur thermique 1 et le couple désiré $T_{ice}^*$ appliqué à la transmission par le moteur.

La troisième couche de la structure de commande, appelée commande d'organes (CORG) est réalisée par un régulateur, destiné à assurer les transitions entre deux points de fonctionnement du système. Pour cela, des capteurs 8 mesurent le couple en sortie des trois moteurs thermique et électriques et le régime du moteur thermique. A partir de ces informations, le couple à la roue $T_{pt}$ est estimé. Cette valeur ainsi que le régime et le couple du moteur thermique sont ensuite comparées aux valeurs de consigne délivrées par la loi de gestion d'énergie (LGE). Les trois actionneurs du système sont commandés en couple par la commande d'organes (CORG), par l'intermédiaire de leurs calculateurs 9 de contrôle. Ainsi, les signaux de sortie de la commande d'organes sont :

$T_{e1}^{\#}$: couple désiré de la machine $3_1$
$T_{e2}^{\#}$ : couple désiré de la machine $3_2$
$T_{ice}^{\#}$: couple désiré du moteur thermique 1

La quatrième couche comprend les calculateurs de contrôle 9, qui pilotent chaque actionneur, à partir des trois commandes en couple précédentes. Le calculateur de contrôle du moteur thermique règle entre autres la richesse de combustion et l'avance à l'allumage pour qu'il fournisse le couple commandé. Les machines électriques du variateur sont aussi commandées en couple par un réglage du courant électrique qui les traverse. Parce que cette couche définit le fonctionnement des actionneurs, le comportement des calculateurs de contrôle est inclus dans la description du système global en vue de la synthèse de la loi de commande des organes.

Cette synthèse de la loi de commande, ou régulateur, implantée dans le calculateur, nécessite la modélisation du groupe motopropulseur hybride à dérivation de puissance dans son comportement dynamique, c'est-à-dire embarqué dans un véhicule automobile considéré en tant qu'inertie présentant une résistance à l'avancement.

Le modèle dynamique du moteur thermique traduit le transfert de couple fourni vers la transmission, par application du théorème du moment cinétique appliqué au niveau de l'arbre moteur, dans l'équation (E1):

$$J_{ice} * \frac{d_{\omega ice}}{dt} = T_{ice} - T_{ice}^0$$

où $J_{ice}$ désigne l'inertie du moteur thermique,
$\omega_{ice}$ désigne la vitesse angulaire, ou régime, de l'arbre moteur,
$T_{ice}$ désigne le couple développé à l'intérieur du moteur thermique,
$T_{ice}^o$ désigne le couple fourni à la transmission par l'arbre moteur.

Le couple $T_{ice}$ est borné par une valeur minimale $T_{ice}^{min}$ et par une valeur maximale $T_{ice}^{max}$ qui dépend du régime $\omega_{ice}$, lui-même compris entre une valeur minimale qui est le régime de ralenti et une valeur maximale supposée constante.

Dans un premier temps, le calculateur de contrôle du moteur thermique est supposé capable d'asservir le moteur pour qu'il fournisse le couple de commande $T_{ice}^{\#}$ avec un certain temps de réponse, et c'est pourquoi l'ensemble moteur et son contrôleur est modélisé par un système du premier ordre. Ainsi, le modèle nominal de la réponse en couple $T_{ice}$ à la commande de couple $T_{ice}^{\#}$ délivrée par la commande d'organes (CORG) est une fonction de transfert du premier ordre $G_{ice}(s)$, de constante de temps $\tau_{ice}$, telle que l'exprime l'équation (E2):

$$\frac{dT_{ice}}{dt} = \frac{T_{ice}^{\#} - T_{ice}}{\tau_{ice}}$$

donc

$$G_{ice}(s) = \frac{1}{\tau_{ice} * s + 1}$$

avec s : variable de Laplace

Concernant les deux machines électriques du variateur dans le groupe motopropulseur, ce sont des moteurs synchrones à aimants permanents. Leur modèle dynamique traduit le transfert de leurs couples vers la transmission par application du théorème du moment cinétique appliqué au niveau de leurs arbres respectifs, dans l'équation double (E3) :

$$J_{e1} * \frac{d_{\omega e1}}{dt} = T_{e1} - T_{e1}^0$$

$$J_{e2} * \frac{d_{\omega e2}}{dt} = T_{e2} - T_{e2}^0$$

où :

$J_{e1}$, $J_{e2}$ désignent l'inertie respective des machines électriques $3_1$ et $3_2$ ;
$\omega_{e1}$, $\omega_{e2}$ désignent la vitesse angulaire de l'arbre moteur des machines $3_1$ et $3_2$ ;
$T_{e1}$, $T_{e2}$ désignent le couple développé à l'intérieur des machines électriques $3_1$ et $3_2$ ;
$T_{e1}^o$, $T_{e2}^o$ désignent le couple fourni à la transmission par l'arbre moteur des machines $3_1$ et $3_2$.

Les couples $T_{e1}$ et $T_{e2}$ sont limités respectivement par des valeurs minimales $T_{e1}^{min}$ et $T_{e2}^{min}$ d'une part et des valeurs maximales $T_{e1}^{max}$ et $T_{e2}^{max}$ d'autre part.

Les calculateurs de contrôle des deux machines sont supposés capables de les piloter pour qu'elles fournissent instantanément les couples demandés sans temps de réponse. Donc les modèles nominaux des réponses en couple $T_{e1}$ et $T_{e2}$ aux commandes de couples $T_{e1}^\#$ et $T_{e2}^\#$ sont des transferts directs, comme l'exprime l'équation (E4) :

$$T_{e1} = T_{e1}^\# \text{ et } T_{e2} = T_{e2}^\#$$

La batterie est la deuxième source d'énergie du véhicule, après le réservoir d'essence. Elle peut à la fois fournir et stocker de l'énergie électrique. Les pertes dans les deux machines électriques étant négligées, la puissance électrique $P_{bat}$ fournie par la batterie aux deux machines est la somme des puissances électriques utilisées par chacune d'elles, comme l'exprime l'équation (E5) :

$$P_{bat} = P_{e1} + P_{e2} = (T_{e1} * \omega_{e1}) + (T_{e2} * \omega_{e2})$$

Cette puissance $P_{bat}$ de la batterie est positive quand la batterie fournit de l'énergie et négative quand elle en reçoit. Elle est limitée par deux bornes minimale $P_{bat}^{min}$ et maximale $P_{bat}^{max}$, qui dépendent de l'état de charge de la batterie.

Le modèle dynamique longitudinal du véhicule tient compte de l'inertie $J_v$ du véhicule rapportée aux roues et augmentée des moments d'inertie des roues, et de la résistance à l'avancement du véhicule exprimée par un couple $T_{res}$ appliqué à travers les roues à la transmission. Cette résistance à l'avancement inclut en particulier la force de freinage hydraulique, la force aérodynamique subie par le véhicule, la force de résistance au roulement s'exerçant au niveau des pneus, la force de gravitation et le léchage des freins.

Le modèle dynamique du véhicule traduit le transfert de ce couple de résistance vers la transmission, déduit du théorème du moment cinétique appliqué au niveau de l'axe des roues, dans l'équation (E6) :

$$J_v * \frac{d_{\omega r}}{dt} = T_{res} - T_{res}^0$$

où $\omega_r$ désigne la vitesse angulaire des roues ;

$T^0_{res}$ désigne le couple fourni à la transmission par l'axe des roues.

Dans une approche approximative, le modèle nominal $G_{res}$ du couple résistant $T_{res}$ est une fonction linéaire de la vitesse des roues $\omega_r$ , selon l'équation (E7) :

$$T_{res} = G_{res}(\omega_r) = r_{res} * \omega_r$$

avec $r_{res}$ : un coefficient déterminé par la méthode de régression linéaire minimisant l'intégrale de l'erreur de l'approximation par rapport à la fonction originale.

Concernant la modélisation de la chaîne cinématique, celle-ci est considérée comme un système à quatre branches reliant le moteur thermique 1, défini par son couple $T_{ice}$ et son régime $\omega_{ice}$, les deux machines électriques $3_1$ et $3_2$, définies par leurs couples $T_{e1}$ et $T_{e2}$ et leurs régimes $\omega_{e1}$ et $\omega_{e2}$ respectivement, et les roues 2 définies par le couple $T_{pt}$ fourni à la transmission et leur vitesse de rotation $\omega_r$.

Cette chaîne cinématique peut être modélisée par les relations matricielles suivantes (E8) et (E9) :

$$\begin{bmatrix} \omega_{e1} \\ \omega_{e2} \end{bmatrix} = M_R * \begin{bmatrix} \omega_{ice} \\ \omega_r \end{bmatrix} \text{ et } \begin{bmatrix} T_{e1} \\ T_{e2} \end{bmatrix} = -M_R^{-T} * \begin{bmatrix} T_{ice} \\ T_{pt} \end{bmatrix}$$

où $M_R$ est une matrice constante carrée, dépendant de la réalisation et du rapport des deux trains épicycloïdaux choisis, et $M_R^T$ est la matrice transposée de $M_R$.

En combinant les relations précédentes, l'évolution temporelle des deux régimes $\omega_{ice}$ du moteur thermique et $\omega_r$ des roues est modélisée par le système $G_s$ décrit par la relation matricielle suivante (E10) :

$$\begin{bmatrix} d\omega_{ice}/dt \\ d\omega_r/dt \end{bmatrix} = B_{tr} * \begin{bmatrix} T_{ice} \\ T_{res} \\ T_{e1} \\ T_{e2} \end{bmatrix}$$

avec la matrice 2x2 : $B_{tr} = [M^{-1} * - M_R^{-T}/- M^{-1}]$

Pour calculer le couple $T_{pt}$ effectivement appliqué aux roues par le groupe motopropulseur, en sortie de la chaîne cinématique, on tient compte du fait que la vitesse du véhicule, donc celle des roues $\omega_r$, évolue en fonction du couple fourni par le groupe motopropulseur et du couple de résistance à l'avancement $T_{res}$, comme l'exprime l'équation (E11) :

$$J_T * \frac{d\omega_r}{dt} = T_{pt} + T_{res}$$

avec $J_T$ : l'inertie totale du système.

D'après la précédente équation matricielle, on en déduit l'équation (E12):

$$J_T * \frac{d\omega_r}{dt} = V_c * \begin{bmatrix} T_{ice} \\ T_{e1} \\ T_{e2} \end{bmatrix} + T_{res}$$

avec $V_c$ : un vecteur constant 1 x 3 défini par la matrice (E13) :

$$V_c = \begin{bmatrix} \dfrac{B_{tr}^{21}}{B_{tr}^{22}} & , \dfrac{B_{tr}^{23}}{B_{tr}^{22}} & , \dfrac{B_{tr}^{24}}{B_{tr}^{22}} \end{bmatrix}$$

$B_{tr}^{ij}$ représentant la valeur dans la ligne i et dans la colonne j de la matrice $B_{tr}$.

Ainsi le couple $T_{pt}$ appliqué aux roues par le groupe motopropulseur s'écrit en fonction des couples $T_{ice}$ , $T_{e1}$ et $T_{e2}$ des trois actionneurs, selon l'équation (E14) :

$$T_{pt} = V_c * \begin{bmatrix} T_{ice} \\ T_{e1} \\ T_{e2} \end{bmatrix}$$

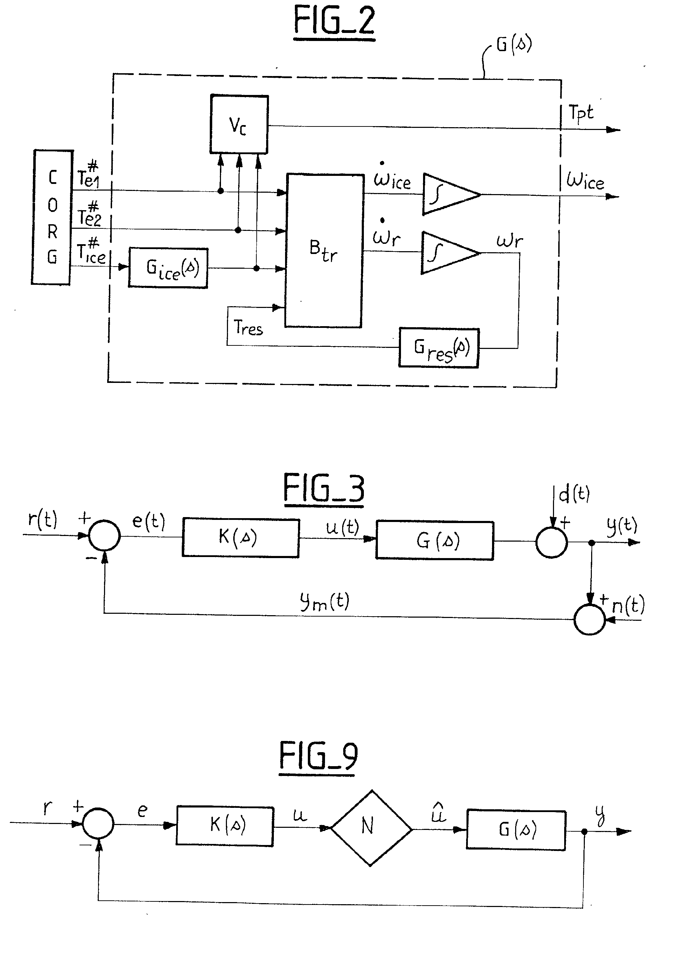

Le système G à contrôler par la commande des organes (CORG) est représenté par le schéma de la figure 2. Le couple $T_{pt}$ effectivement appliqué aux roues est obtenu selon l'équation (E14), le régime $\omega_{ice}$ effectif du moteur thermique est obtenu par intégration de $d\omega_{ice}/dt$ défini par l'équation (E10) et le couple $T_{ice}$ effectif est obtenu à partir de l'équation (E2).

La loi de gestion d'énergie génère les consignes de couple $T_{ice}*$ et de régime $\omega_{ice}*$, qui définissent le point de fonctionnement du moteur thermique. Ces consignes définissent avec la référence de couple $T_{pt}*$ implicitement les points de fonctionnement des machines électriques. Les consignes sont choisies pour que le point de fonctionnement du système global soit dans le domaine admissible, c'est-à-dire que toutes les limitations de chaque organe soient respectées.

La présence d'une boucle fermée sur les trois signaux $T_{pt}$ , $\omega_{ice}$ et $T_{ice}$ pour lesquels le régulateur de commande reçoit une consigne, se justifie premièrement car le système est soumis aux perturbations et aux bruits de mesure, deuxièmement car les paramètres du système, utilisés pour la mise au point du contrôle, peuvent varier et troisièmement car le suivi des consignes peut être conservé, quand les limitations des organes sont atteintes, par une nouvelle répartition des commandes.

Les objectifs de la loi de commande des organes selon l'invention, sont les suivants :

- stabiliser le système ;
- suivre les consignes en respectant un certain délai et une certaine précision ;
- rejeter les perturbations dues aux inexactitudes des capteurs, et les bruits ;
- assurer la stabilité du système et les performances pour des incertitudes de modélisation, quand un ou plusieurs actionneurs atteignent leurs limitations.

La description ainsi obtenue du système, c'est-à-dire du groupe motopropulseur avec transmission infiniment variable intégré dans un véhicule, est un modèle dynamique linéaire invariant dans le temps, défini par les deux équations suivantes (E15) et (E16) :

7

$$\begin{bmatrix} \dfrac{d\omega_{ice}}{dt} \\ \dfrac{d\omega_r}{dt} \\ T_{ice} \end{bmatrix} = A_k * \begin{bmatrix} \omega_{ice} \\ \omega_r \\ T_{ice} \end{bmatrix} + B_k * \begin{bmatrix} T_{e1}^{\#} \\ T_{e2}^{\#} \\ T_{ice}^{\#} \end{bmatrix}$$

$$\begin{bmatrix} T_{pt} \\ \omega_{ice} \\ T_{ice} \end{bmatrix} = C_k * \begin{bmatrix} \omega_{ice} \\ \omega_r \\ T_{ice} \end{bmatrix} + D_k * \begin{bmatrix} T_{e1}^{\#} \\ T_{e2}^{\#} \\ T_{ice}^{\#} \end{bmatrix}$$

Ce système dynamique a trois entrées $T_{e1}^{\#}$, $T_{e2}^{\#}$ et $T_{ice}^{\#}$, soit les trois commandes des actionneurs, et ses états sont le régime $\omega_{ice}$ et le couple $T_{ice}$ du moteur thermique ainsi que le régime des roues $\omega_r$. Les sorties à réguler sont le couple $T_{pt}$ fourni par la transmission aux roues, le couple $T_{ice}$ et le régime $\omega_{ice}$ du moteur thermique.

Les coefficients $A_k$, $B_k$, $C_k$ et $D_k$ sont des matrices 3 x 3.

Le système linéarisé est commandé par la loi de commande du régulateur dans une structure de retour d'erreur, comme le montre le schéma de la figure 3. Tous les signaux mentionnés sont des vecteurs. Les consignes r (t) sont les signaux reçus de la loi de gestion d'énergie LGE comme des références à suivre. Les sorties du système G(s) sont perturbées par le signal d(t) pour former les sorties réelles y(t) qui sont mesurées pour être comparées aux consignes. Les mesures étant relativement inexactes, on ajoute un signal de bruit n(t) aux sorties réelles pour obtenir les sorties mesurées $y_m$(t). Le résultat de la comparaison entre ces sorties et les consignes constitue les erreurs de régulation e(t). Le régulateur K(s) pilote le système par les commandes u(t).

Le régulateur robuste doit de plus stabiliser l'ensemble des modèles définis autour du modèle nominal G linéaire déterminé auparavant, et d'autre part robustement performant quand il atteint certaines performances pour cet ensemble. Pour cela, le système doit être modifié par adjonction à la fois des incertitudes paramétriques, décrites par un facteur réel, qui traduisent le fait que la valeur de certains paramètres du système peuvent différer de la modélisation, et des incertitudes dynamiques, décrites par un facteur complexe, qui traduisent le fait que la dynamique réelle ne correspond pas exactement à la dynamique modélisée par les équations.

Dans le modèle nominal, le moteur thermique avec son régulateur est décrit par un système du premier ordre, avec une constante de temps $\tau_{ice}$. Pour décrire l'écart entre le moteur réel et le modèle, on introduit une incertitude dynamique sur le modèle nominal $G_{ice}$, traduite par l'équation (E17) :

$$G_{ice}^{\Delta}(S) = G_{ice}(S) + p_{ice}(s) * \delta_{ice}$$

où $G_{ice}^{\Delta}$(s) est la fonction de transfert de la commande $T_{ice}^{\#}$ vers $T_{ice}$,

$p_{ice}$ est une fonction de pondération pour ajuster l'amplitude de l'incertitude en fonction de la fréquence à 1,

$\delta_{ice}$ est un gain complexe incertain multiplicatif pour le moteur thermique, de norme inférieure ou égale à 1.

La fonction de pondération $p_{ice}$ peut avoir la forme de l'équation (E18) suivante, dans un cas particulier non limitatif :

$$p_{ice}(s) = \frac{\tau_{ice} * s + e_o}{(\tau_{ice}/e_\infty) * s + 1}$$

où $e_0$ est l'incertitude relative statique,

$e_\infty$ est l'incertitude relative en haute fréquence,

$1/\tau_{ice}$ est la fréquence estimée où l'incertitude relative est égale à 1.

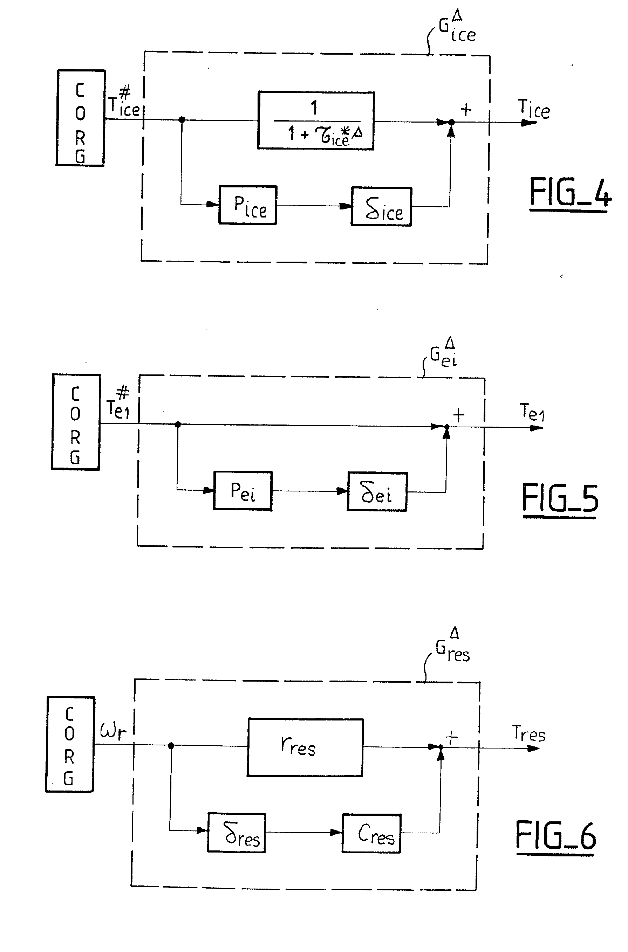

La figure 4 est une représentation schématique du modèle $G_{ice}^\Delta$ du moteur thermique avec son incertitude dynamique.

Pour décrire l'écart entre les deux machines électriques réelles du variateur et les modèles utilisés, on introduit une incertitude dynamique sur le modèle nominal $G_{ei}$ de la machine $3_i$, i variant de 1 à 2, traduite par l'équation (E19) :

$$G_{ei}^\Delta(s) = G_{ei}(s) + P_{ei}(s) * \delta_{ei}$$

où $G_{ei}^\Delta(s)$ est la fonction de transfert entre le couple commandé $T_{ei}\#$ et le couple réalisé $T_{ei}$,

$p_{ei}$ est une fonction de pondération pour ajuster l'amplitude de l'incertitude en fonction de la fréquence à 1,

$\delta_{ei}$ est un gain complexe incertain, de norme inférieure ou égale à 1.

Les fonctions de pondération $p_{ei}$ peuvent prendre la même forme que celle utilisée dans le cas du moteur thermique.

La figure 5 est une représentation schématique des modèles $G_{ei}^\Delta$, i variant de 1 à 2, des deux machines électriques du variateur, avec leurs incertitudes dynamiques.

Concernant la résistance à l'avancement, dans le modèle nominal, il faut tenir compte d'une part du fait que le couple de résistance $T_{res}$ en fonction de la vitesse du véhicule, qui est proportionnelle à la vitesse angulaire $\omega_r$ des roues, a été considéré comme une relation linéaire (équation E7), et d'autre part de l'influence du vent, de la masse du véhicule et de la pente de la route.

Pour cela, on définit une incertitude paramétrique sur le coefficient $r_{res}$ , traduite par l'équation (E20) :

$$G_{res}^\Delta = (r_{res} + c_{res} * \delta_{res})$$

où $G_{res}^\Delta$ est la fonction de transfert du régime des roues $\omega_r$ au couple résistant $T_{res}$,

$c_{res}$ est un facteur constant pour ajuster l'amplitude de l'incertitude à 1,

$\delta_{res}$ est un gain réel incertain.

La figure 6 est une représentation schématique d'un modèle $G_{res}^\Delta$ de l'expression du couple de résistance avec une incertitude paramétrique.

Le procédé selon l'invention tient compte de plus de l'incertitude sur la masse totale du véhicule, dont un changement induit un changement proportionnel de l'inertie $J_v$ du véhicule.

Pour connaître l'influence de l'inertie du véhicule $J_v$ sur la matrice $B_{tr}$ de l'expression traduisant l'évolution dynamique des régimes, mentionnée auparavant dans l'équation (E10) :

$$\begin{pmatrix} \dfrac{d\omega_{ice}}{dt} \\ \dfrac{d\omega_r}{dt} \end{pmatrix} = B_{tr} * \begin{bmatrix} T_{ice} \\ T_{res} \\ T_{e1} \\ T_{e2} \end{bmatrix}$$

il faut ajouter une incertitude paramétrique sur l'inertie $J_v$, apparaissant dans l'équation (E21) :

$$\begin{pmatrix} \mathrm{d}\omega_{ice}/\mathrm{dt} \\ \mathrm{d}\omega_r/\mathrm{dt} \end{pmatrix} \doteq \begin{bmatrix} B_{tr} + \Delta^m.W^m.B'_{tr} \end{bmatrix} * \begin{bmatrix} T_{ice} \\ T_{res} \\ T_{e1} \\ T_{e2} \end{bmatrix}.$$

où $\Delta^m$ est une matrice carrée diagonale, définie par un gain réel incertain $\delta_m$,

$W^m$ est une matrice carrée constante limitant la norme de l'incertitude $\delta_m$ à 1,

$B'_{tr}$ est une matrice constante 2 x 4, définissant l'influence de l'inertie $J_v$ sur la matrice $B_{tr}$.

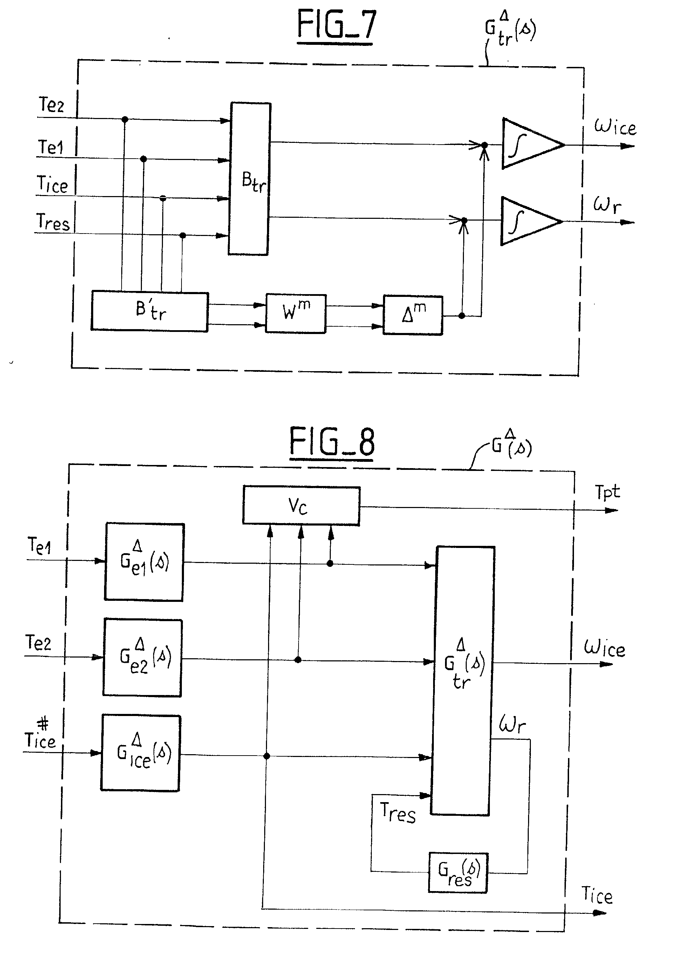

La matrice de transfert reliant les quatre couples $T_{ice}$, $T_{e1}$, $T_{e2}$, $T_{res}$ , qui entrent dans la transmission, aux deux régimes en sortie et appelée $G_{tr}^{\Delta}(s)$, est représentée sur la figure 7.

Ainsi, le schéma bloc du modèle global $G^{\Delta}$ avec toutes les incertitudes décrites précédemment est représenté sur la figure 8.

On cherche ensuite un régulateur K qui atteigne certaines performances pour ce modèle global avec incertitudes. Ces objectifs de performance sont définis en termes de suivi de consignes, atténuation du bruit et réduction des influences des perturbations. Ce régulateur est obtenu par minimisation d'une norme H∞. La recherche d'un régulateur qui assure la robustesse en performances et stabilité, dans le domaine des basses comme des hautes fréquences, constitue un problème dit de μ synthèse. Un exemple non limitatif de solution de cette recherche est la technique itérative appelée DK itération. L'ordre du régulateur robuste aux incertitudes et aux bruits, obtenu par itération DK étant trop élevé pour être embarqué sur véhicule, le procédé selon l'invention utilise la méthode de troncation équilibrée pour réduire l'ordre tout en conservant la plupart des caractéristiques originales du régulateur. Un régulateur d'ordre 12 a pu être obtenu.

Après avoir réalisé un régulateur robuste aux incertitudes et aux bruits et aux perturbations, le procédé selon l'invention tient compte des saturations ou limitations physiques des organes de commande du système, qui imposent des limitations sur les couples appliqués par les trois actionneurs. Cette prise en compte des saturations est nécessaire pour assurer le bon fonctionnement de la commande de la transmission quand un ou plusieurs des organes atteint ses limitations en couple. En effet, ceux-ci peuvent se traduire par une dégradation de l'agrément de conduite et des performances.

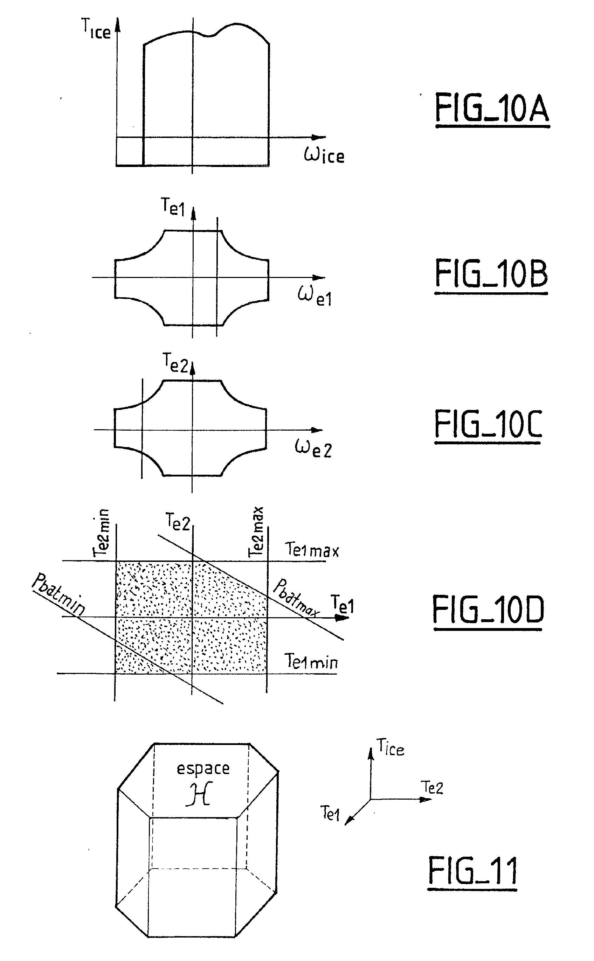

La description mathématique des saturations sur les commandes de couples est représentée par un bloc non linéaire N entre le régulateur K et le système G, comme le montre le schéma décrivant la saturation des commandes u(t) dans la figure 9. Les trois couples de commande $T_{ice}{}^{\#}$, $T_{e1}{}^{\#}$ et $T_{e2}{}^{\#}$ des trois actionneurs, que sont le moteur thermique et les deux machines électriques, peuvent être saturés. En effet, le couple $T_{ice}$ appliqué par le moteur thermique à la transmission est borné par deux valeurs extrêmes $T_{ice}{}^{min}$ et $T_{ice}{}^{max}$, le couple maximal dépendant du régime moteur, comme cela a été mentionné à propos de l'équation (E1) du modèle dynamique du moteur et représenté sur la figure 10A.

Les couples $T_{e1}$ et $T_{e2}$ appliqués par les deux machines $3_1$ et $3_2$ sont aussi bornés par deux valeurs extrêmes $T_{e1}{}^{min}$ et $T_{e2}{}^{max}$ pour l'une et $T_{e2}{}^{min}$ et $T_{e2}{}^{max}$ pour l'autre, dépendant de leurs régimes respectifs, comme cela a été mentionné à propos de l'équation double (E3) de leurs modèles dynamiques (figures 10B et 10C).

Une contrainte supplémentaire est imposée par la limitation sur la puissance électrique $P_{bat}$ fournie par la batterie, entre deux valeurs extrêmes $P_{bat}{}^{min}$ et $P_{bat}{}^{max}$, dépendant de l'état de charge, comme mentionné à propos de l'équation (E5) du modèle de la batterie. La combinaison des couples des machines électriques, limitée par la puissance batterie est représentée sur la figure 10D.

Les trois commandes de couple du système G définissent un espace tridimensionnel, dans lequel les limitations précédemment décrites définissent de plus le domaine de commande admissible, représenté par $\mathscr{H}$ sur la figure 11. Les valeurs limites du domaine sont données avec des cartographies à partir des régimes des machines électriques, du moteur thermique et de l'état de charge de la batterie.

Dans le groupe motopropulseur hybride auquel s'appliquent les commandes selon l'invention, une demande ou une offre excessive de la puissance de la batterie peut gravement nuire, voire détruire celle-ci. C'est pourquoi elle est équipée de fusibles coupant tout contact avec la batterie en cas de dépassement des valeurs limites. Il est donc important de limiter les couples demandés aux machines électriques pour que la puissance demandée de la batterie reste incluse dans des limites. Pour cela, le procédé choisit de limiter les commandes avant de les appliquer au système et d'inclure le bloc non linéaire N dans le régulateur.

Ce bloc N est défini par une fonction N(u), qui est la projection de toutes les sorties u du régulateur linéaire K aux entrées û = N(u) du système pour que ces dernières soient dans le domaine admissible $\mathcal{H}$ .

Cette projection est telle que, dans le domaine linéaire, pour les vecteurs u qui sont déjà dans le domaine admissible $\mathcal{H}$ , ils ne doivent pas être changés. Dans cette région du domaine, si û = u, alors N est la fonction identité I. Ainsi, le régulateur linéaire calculé auparavant commande le système directement quand les saturations ne sont pas atteintes.

Cette projection est également indépendante du couple $T_{ice}$ du moteur thermique. Dans le cas d'un dépassement d'une des valeurs limites $T_{ice}^{min}$ ou $T_{ice}^{max}$ pour le couple $T_{ice}$, la valeur $T_{ice}$ transmise au système ne dépend pas des autres commandes. La situation est alors indépendante et la projection est réalisée selon les équations (E22) suivantes :

$$\overset{\wedge}{T_{ice}} = N(T_{ice}) = T_{ice} \text{ si } T_{ice}^{min} \leq T_{ice} \leq T_{ice}^{max}$$
$$= T_{ice}^{min} \text{ si } T_{ice} < T_{ice}^{min}$$
$$= T_{ice}^{max} \text{ si } T_{ice} > T_{ice}^{max}$$

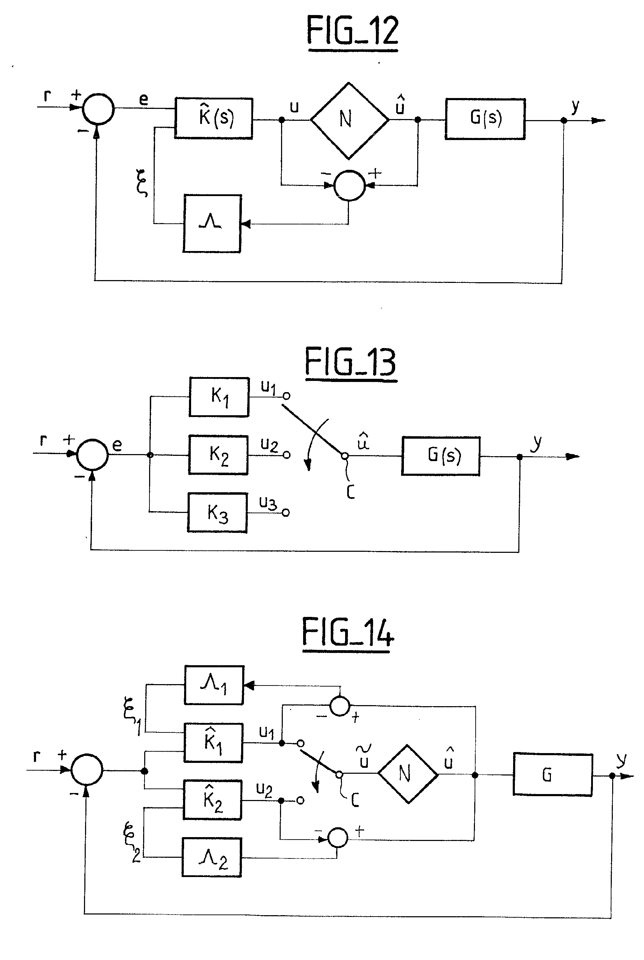

Pour éviter les problèmes de « windup » du régulateur, c'est-à-dire d'augmentation excessive des termes d'intégration du régulateur linéaire, le procédé utilise une méthode de compensation statique des saturations. Dans une première phase, un régulateur K a été calculé pour assurer une performance satisfaisante pour le système G, sans saturation. Quand le bloc non linéaire N, décrivant les saturations, est inclus dans le régulateur du système, une compensation est mise en place dans une deuxième phase. Cette phase comprend la comparaison des signaux de commande effectifs û, arrivant en entrée du système G, avec les signaux de commande u délivrés par le régulateur linéaire K, suivie d'une compensation statique « anti-windup ». La valeur optimale du gain compensateur $\Lambda$, qui est une matrice 3 x 3, corrigeant les états du régulateur linéairement par rapport à la différence entre les valeurs avant et après saturation des commandes, est optimisé par une méthode basée sur les Inégalités Linéaires Matricielles - LMI -. Ce compensateur $\Lambda$ calcule les signaux $\xi_1$ et $\xi_2$ qui vont corriger les états du régulateur K pour lui assurer un meilleur comportement. Ce régulateur K, auquel est ajoutée une entrée supplémentaire constituée par les vecteurs $\xi_1$ et $\xi_2$, devient un régulateur modifié $K$, comme le montre le schéma de la figure 12 représentant une structure de la compensation statique des saturations des actionneurs.

Le compensateur $\Lambda$ agit sur le régulateur K d'une part avec le vecteur $\xi_1$ qui influence les états $x_k$ et d'autre part avec le vecteur $\xi_2$ qui influence directement les sorties u du régulateur. Le régulateur modifié $K$ est décrit par les équations (E23) suivantes :

$$\dot{x}_k = A_k * x_k + B_k * e + \xi_1$$

$$u = c_k * x_k + D_k * e + \xi_2$$

Le procédé selon l'invention prend en compte un autre problème, celui des saturations de la batterie. En effet, quand la batterie atteint ses limites de capacité et devient vide ou pleine, les valeurs limites de la puissance $P_{bat}$ sont discontinues. Si les deux machines électriques utilisent de l'énergie de la batterie et que son état de charge SOC devient nul, un changement soudain dans le couple $T_{pt}$ appliqué aux roues se produit, provoquant un à-coup ressenti désagréablement par le conducteur. Un tel changement soudain dans les conditions de la batterie ne peut être compensé instantanément par un couple plus élevé fourni par le moteur thermique.

La stratégie de commande doit anticiper ce problème. Une solution consiste donc à réaliser une structure multi-régulateur regroupant plusieurs régulateurs en parallèle, calculés pour différentes plages de fonctionnement ou pour différents objectifs de commande. Cette structure nécessite la gestion des commutations entre plusieurs régulateurs de commande d'une transmission infiniment variable afin d'éviter le désagrément des à-coups.

Une structure de commande avec plusieurs régulateurs $K_1$, $K_2$ et $K_3$ montés en parallèle est représentée sur la figure 13. Chaque régulateur est connecté à un commutateur C et reçoit en permanence l'erreur de commande e entre la valeur de sortie y du système G et la consigne r. Le commutateur C sélectionne la sortie $u_i$ du régulateur $K_i$ qui deviendra la commande û à l'entrée du système.

Lors du remplacement de la sortie $u_i$ du régulateur $K_i$ par la sortie $u_j$ d'un autre régulateur $K_j$, au cours d'une commutation de régulateurs, il arrive souvent que les états du régulateur $K_j$ ne correspondent pas à l'entrée du système G à commander, parce qu'ils ont évolué dans une boucle ouverte sans avoir eu d'influence sur ledit système. C'est pourquoi la valeur $u_j$ peut être très différente de celle de $U_i$, ce qui provoque un à-coup dans les couples fournis à la transmission car le régulateur commuté ne peut faire correspondre instantanément ses états avec ceux du système. Pour corriger ce problème de différences entre la sortie du régulateur $K_i$ et l'entrée du système G, le procédé de synthèse selon l'invention utilise une méthode de compensation statique optimisée avec une Inégalité Linéaire Matricielle (LMI), qui consiste à corriger les états $x_{ki}$ du régulateur $K_i$ par un signal $\xi_i$, qui est le produit du gain $\Lambda_i$ d'un compensateur par la différence entre l'entrée $\hat{u}$ du système G et la sortie de commande $u_i$ dudit régulateur, selon l'équation (E24) :

$$\xi_i = \Lambda_i * \left( \hat{u} - u_i \right)$$

Cette compensation est appliquée à chaque régulateur, comme le montre la figure 14 qui est un schéma de structure de commande à deux régulateurs commutables. Les régulateurs sont définis par les équations suivantes (E25) :

$$\dot{x}_{ki} = A_{ki} * x_{ki} + B_{ki} * e + \xi_i$$

$$u_i = C_{ki} * x_{ki} + D_{ki} * e$$

Quand un régulateur est connecté, le vecteur de différence $(\hat{u} - u_i)$ est nul et le régulateur n'est pas modifié.

Pour tenir compte des saturations dans la structure finale de commande, la commande $\tilde{u}$ passe d'abord par la fonction non linéaire N de saturation pour délivrer la commande $\hat{u}$ réellement envoyée aux trois actionneurs du système G. Ainsi, la compensation de saturation et la compensation de transfert de régulateur ont lieu simultanément pour chaque régulateur. Les matrices qui définissent les gains matriciels $\Lambda_1$ et $\Lambda_2$ sont obtenus par application d'une méthode de minimisation par la solution d'une Inégalité Linéaire Matricielle où la commutation et la saturation sont considérées comme une seule fonction non linéaire.

Le procédé de synthèse selon l'invention permet de réaliser une commande multivariable du groupe motopropulseur d'un véhicule garantissant un niveau satisfaisant de performances, ainsi que la stabilité du système asservi, malgré la présence d'erreurs paramétriques et dynamiques dans la phase de modélisation. De plus, la prise en compte des saturations des actionneurs dans la loi de commande permet de garder la stabilité et de conserver un maximum des performances aux points de fonctionnement correspondant aux saturations.

**Revendications**

**1.** Procédé de synthèse d'une loi de commande d'une transmission infiniment variable d'un groupe motopropulseur de véhicule automobile, à dérivation de puissance du moteur thermique vers les roues en une première voie comprenant une chaîne cinématique et une seconde voie comportant un variateur à deux machines électriques reliées à un élément de stockage de l'énergie électrique, **caractérisé en ce que**, ladite loi étant déterminée par un régulateur d'une unité centrale électronique (13) de type superviseur à trois niveaux de commande pour être délivrée aux trois calculateurs de contrôle (9) qui pilotent le moteur thermique (1) et les machines électriques ($3_1$, $3_2$) de la transmission, il comprend les phases suivantes :

- modélisation du comportement dynamique du groupe motopropulseur selon un modèle dynamique linéaire invariant dans le temps, recevant en entrée les trois commandes en couple ($T_{ice}{}^{\#}$, $T_{e1}{}^{\#}$ et $T_{e2}{}^{\#}$) des trois actionneurs (1, $3_1$, $3_2$) d'une part et les états du véhicule (10) soit le couple ($T_{ice}$) et le régime ($\omega_{ice}$) du moteur thermique (1) et le régime ($\omega_r$) des roues (2) d'autre part, pour délivrer le couple ($T_{pt}$) fourni par la transmission aux roues, le couple ($T_{ice}$) et le régime ($\omega_{ice}$) du moteur thermique ;
- correction du modèle linéaire du groupe motopropulseur par introduction des incertitudes dynamiques du moteur thermique (1) et des machines électriques ($3_1$, $3_2$) et des incertitudes paramétriques sur la résistance à l'avancement et sur la masse du véhicule ;

- calcul par la méthode de minimisation d'une norme H∞ , d'un régulateur robuste en performances qui stabilise tous les systèmes décrits par ledit modèle avec incertitudes.

**2.** Procédé de synthèse d'une loi de commande selon la revendication 1, **caractérisé en ce que** la modélisation du comportement dynamique du groupe motopropulseur comporte les étapes suivantes :

- modélisation de la réponse en couple ($T_{ice}$) à la commande de couple ($T_{ice}^{\#}$) délivrée par le régulateur ;
- modélisation des réponses en couple ($T_{e1}$ et $T_{e2}$) aux commandes de couples ($T_{e1}^{\#}$ et $T_{e2}^{\#}$) ;
- modélisation de la puissance de la batterie ;
- modélisation du comportement dynamique longitudinal du véhicule ;
- modélisation de la chaîne cinématique, considérée comme un système à quatre branches reliant le moteur thermique (1), défini par son couple ($T_{ice}$) et son régime ($\omega_{ice}$), les deux machines électriques ($3_1$ et $3_2$), définies par leurs couples ($T_{e1}$ et $T_{e2}$) et leurs régimes ($\omega_{e1}$ et $\omega_{e2}$) respectivement, et les roues (2) définies par le couple ($T_{pt}$) fourni à la transmission et leur vitesse de rotation ($\omega_r$) ;
- calcul du modèle dynamique linéaire invariant dans le temps du groupe motopropulseur.

**3.** Procédé de synthèse d'une loi de commande selon la revendication 2, **caractérisé en ce que** la modélisation de la réponse en couple ($T_{ice}$) à la commande de couple ($T_{ice}^{\#}$) délivrée par le régulateur est une fonction de transfert du premier ordre $G_{ice}(s)$, de constante de temps $\tau_{ice}$ telle que :

$$G_{ice}(s) = \frac{1}{\tau_{ice} * s + 1}$$

avec :

$$\frac{dT_{ice}}{dt} = \frac{T_{ice}^{\#} - T_{ice}}{\tau_{ice}}$$

et s : variable de Laplace

($T_{ice}$) étant obtenu à partir du modèle dynamique du moteur thermique qui traduit le transfert de couple fourni vers la transmission, par application du théorème du moment cinétique appliqué au niveau de l'arbre moteur, selon l'équation :

$$J_{ice} * \frac{d\omega_{ice}}{dt} = T_{ice} - T_{ice}^{0}$$

où $J_{ice}$ désigne l'inertie du moteur thermique

$\omega_{ice}$ désigne la vitesse angulaire, ou régime, de l'arbre moteur

$T_{ice}$ désigne le couple développé à l'intérieur du moteur thermique

$T^{o}_{ice}$ désigne le couple fourni à la transmission par l'arbre moteur.

**4.** Procédé de synthèse d'une loi de commande selon la revendication 2, **caractérisé en ce que** la modélisation des réponses en couple ($T_{e1}$ et $T_{e2}$) aux commandes de couples ($T_{e1}^{\#}$ et $T_{e2}^{\#}$) sont des transferts directs, selon l'équation : $T_{e1} = T_{e1}^{\#}$ et $T_{e2} = T_{e2}^{\#}$

($T_{e1}$ et $T_{e2}$) étant obtenues à partir du modèle dynamique des deux machines électriques du variateur, considérées comme des moteurs synchrones à aimants permanents, modèle qui traduit le transfert de leurs couples vers la transmission par application du théorème du moment cinétique appliqué au niveau de leurs arbres respectifs, selon les équations :

$$J_{e1} * \frac{d\omega_{e1}}{dt} = T_{e1} - T_{e1}^{0}$$

$$J_{e2} * \frac{d\omega_{e2}}{dt} = T_{e2} - T_{e2}^0$$

où :

$J_{e1}$, $J_{e2}$ désignent l'inertie des machines électriques ($3_1$ et $3_2$),
$\omega_{e1}$, $\omega_{e2}$ désignent la vitesse angulaire de l'arbre moteur des machines ($3_1$ et $3_2$),
$T_{e1}$, $T_{e2}$ désignent le couple développé à l'intérieur des machines électriques ($3_1$ et $3_2$),
$T_{e1}°$, $T_{e2}°$ désignent le couple fourni à la transmission par l'arbre moteur des machines ($3_1$ et $3_2$).

5. Procédé de synthèse d'une loi de commande selon la revendication 2, **caractérisé en ce que** la modélisation de la puissance électrique ($P_{bat}$) fournie par la batterie aux deux machines ($3_1$ et $3_2$) est la somme des puissances électriques utilisées par chacune d'elles, selon l'équation :

$$P_{bat} = P_{e1} + P_{e2} = (T_{e1} * \omega_{e1}) + (T_{e2} * \omega_{e2})$$

cette puissance de la batterie étant positive quand la batterie fournit de l'énergie et négative quand elle en reçoit.

6. Procédé de synthèse d'une loi de commande selon la revendication 2, **caractérisé en ce que** le modèle du comportement dynamique longitudinal du véhicule tient compte de l'inertie ($J_v$) du véhicule rapportée aux roues (2) et augmentée des moments d'inertie des roues, et du couple ($T_{res}$) de résistance à l'avancement du véhicule, appliqué à travers les roues à la transmission, et traduit le transfert de ce couple de résistance vers la transmission, déduit du théorème du moment cinétique appliqué au niveau de l'axe des roues, selon l'équation :

$$J_v * \frac{d\omega_r}{dt} = T_{res} - T_{res}^0$$

où $\omega_r$ désigne la vitesse angulaire des roues,
$T°_{res}$ désigne le couple fourni à la transmission par l'axe des roues.

7. Procédé de synthèse d'une loi de commande selon la revendication 2, **caractérisé en ce que** le modèle de la chaîne cinématique exprime le couple ($T_{pt}$) appliqué aux roues par le groupe motopropulseur, en fonction des couples ($T_{ice}$, $T_{e1}$, $T_{e2}$) des trois actionneurs (1, $3_1$, $3_2$), selon l'équation :

$$T_{pt} = V_c * \begin{bmatrix} T_{ice} \\ T_{e1} \\ T_{e2} \end{bmatrix}$$

avec $V_c$ : une matrice constante 1 x 3 défini par :

$$V_c = \begin{bmatrix} \dfrac{B_{tr}^{21}}{B_{tr}^{22}} & , \dfrac{B_{tr}^{23}}{B_{tr}^{22}} & , \dfrac{B_{tr}^{24}}{B_{tr}^{22}} \end{bmatrix}$$

$B_{tr}^{ij}$ représentant la valeur dans la ligne i et dans la colonne j de la matrice $B_{tr}$, traduisant l'évolution temporelle des deux régimes ($\omega_{ice}$) du moteur thermique (1) et ($\omega_r$) des roues (2) en fonction des couples ($T_{ice}$, $T_{e1}$, $T_{e2}$) des trois actionneurs et du couple de résistance à l'avancement ($T_{res}$) par la relation matricielle suivante :

$$\begin{bmatrix} d\omega_{ice}\,/\,dt \\ d\omega_r\,/\,dt \end{bmatrix} = B_{tr}\,*\begin{bmatrix} T_{ice} \\ T_{res} \\ T_{e1} \\ T_{e2} \end{bmatrix}$$

**8.** Procédé de synthèse d'une loi de commande selon la revendication 2, **caractérisé en ce que** le modèle dynamique linéaire du groupe motopropulseur, invariant dans le temps, est défini en entrée à partir des trois commandes des actionneurs ($T_{e1}{}^{\#}$, $T_{e2}{}^{\#}$, $T_{ice}{}^{\#}$) et de ses états qui sont le régime ($\omega_{ice}$) et le couple ($T_{ice}$) du moteur thermique (1) ainsi que le régime ($\omega_r$) des roues (2), et en sortie par le couple ($T_{pt}$) fourni par la transmission aux roues, le couple ($T_{ice}$) et le régime ($\omega_{ice}$) du moteur thermique, selon les équations :

$$\begin{bmatrix} \dfrac{d\omega_{ice}}{dt} \\ \dfrac{d\omega_r}{dt} \\ T_{ice} \end{bmatrix} = A_k\,*\begin{bmatrix} \omega_{ice} \\ \omega_r \\ T_{ice} \end{bmatrix} + B_k\,*\begin{bmatrix} T_{e1}^{\#} \\ T_{e2}^{\#} \\ T_{ice}^{\#} \end{bmatrix}$$

$$\begin{bmatrix} T_{pt} \\ \omega_{ice} \\ T_{ice} \end{bmatrix} = C_k\,*\begin{bmatrix} \omega_{ice} \\ \omega_r \\ T_{ice} \end{bmatrix} + D_k\,*\begin{bmatrix} T_{e1}^{\#} \\ T_{e2}^{\#} \\ T_{ice}^{\#} \end{bmatrix}$$

les coefficients $A_k$, $B_k$, $C_k$ et $D_k$ étant des matrices 3 x 3.

**9.** Procédé de synthèse d'une loi de commande selon la revendication 2, **caractérisé en ce que** la correction du modèle linéaire du groupe motopropulseur comporte les étapes suivantes :

- introduction d'une incertitude dynamique sur le modèle nominal ($G_{ice}$) du moteur thermique (1), traduite par l'équation :

$$G_{ice}^{\Delta}\,(s) = G_{ice}\,(s) + p_{ice}\,(s)\,*\,\delta_{ice}$$

où $G_{ice}^{\Delta}\,(s)$ est la fonction de transfert de la commande $T_{ice}{}^{\#}$ vers le couple du moteur$T_{ice}$,
$p_{ice}$ est une fonction de pondération pour ajuster l'amplitude de l'incertitude à 1,
$\delta_{ice}$ est un gain complexe incertain multiplicatif pour le moteur thermique, de norme inférieure ou égale à 1 ;

- introduction d'une incertitude dynamique sur le modèle nominal ($G_{ei}$) des machines électriques ($3_i$, i variant de 1 à 2), traduite par l'équation :

$$G_{ei}^{\Delta}(s) = G_{ei}(s) + p_{ei}(s)^* \delta_{ei}$$

où $G_{ei}^{\Delta}(s)$ est la fonction de transfert entre le couple commandé $T_{ei}^{\#}$ et le couple réalisé $T_{ei}$,
$p_{ei}$ est une fonction de pondération pour ajuster l'amplitude de l'incertitude à 1,
$\delta_{ei}$ est un gain complexe incertain, de norme inférieure ou égale à 1 ;

- introduction d'une incertitude paramétrique sur le couple de résistance ($T_{res}$) à l'avancement du véhicule traduite par l'équation :

$$G_{res}^{\Delta} = (r_r + c_{res} * \delta_{res})$$

où $G_{res}^{\Delta}$ est la fonction de transfert du régime des roues $\omega_r$ au couple résistant $T_{res}$, avec $T_{res} = r_r . \omega_r$, $r_r$ étant un coefficient déterminé par la méthode de régression linéaire minimisant l'intégrale de l'erreur de l'approximation par rapport à la fonction originale ;
$c_{res}$ est un facteur constant pour ajuster l'amplitude de l'incertitude à 1 ;
$\delta_{res}$ est un gain réel incertain ;

- introduction d'une incertitude paramétrique sur l'inertie ($J_v$) du véhicule, apparaissant dans l'évolution dynamique des régimes ($\omega_{ice}$) du moteur thermique (1) et ($\omega_r$) des roues (2)

$$\begin{pmatrix} d\omega_{ice}/dt \\ d\omega_r/dt \end{pmatrix} = \begin{bmatrix} B_{tr} + \Delta^m . W^m . B'_{tr} \end{bmatrix} * \begin{bmatrix} T_{ice} \\ T_{res} \\ T_{e1} \\ T_{e2} \end{bmatrix}$$

où $\Delta^m$ est une matrice carrée diagonale, définie par un gain réel incertain $\delta_m$,
$W^m$ est une matrice carrée constante pour ajuster l'amplitude de l'incertitude $\delta_m$ à 1,
$B'_{tr}$ est une matrice constante 2 x 4, définissant l'influence de l'inertie $J_v$ sur la matrice $B_{tr}$.

**10.** Procédé de synthèse d'une loi de commande selon la revendication 1, **caractérisé en ce que** la recherche du régulateur robuste en performances qui stabilise les systèmes décrits par ledit modèle avec incertitudes est effectuée par la technique DK itération, associée à la méthode de troncation équilibrée pour réduire l'ordre du régulateur.

**11.** Procédé de synthèse d'une loi de commande selon la revendication 1, **caractérisé en ce qu'**il comprend une phase supplémentaire de prise en compte des limitations physiques des commandes (u) de couples appliquées au système (G) par les actionneurs (1, $3_1$, $3_2$) de la transmission, comportant les étapes suivantes :

- introduction d'une fonction non linéaire N(u) dans le régulateur (K) décrivant lesdites saturations ;
- compensation statique des saturations par correction des états et des sorties du régulateur uniquement quand les limitations en couple des actionneurs sont atteintes, sans modification des commandes (u) du régulateur hors saturations.

**12.** Procédé de synthèse d'une loi de commande selon la revendication 11, **caractérisé en ce que** la fonction non linéaire N(u) est la projection de toutes les sorties (u) du régulateur (K) aux entrées û = N(u) du système (G) pour

EP 1 255 175 A1

que celles-ci soient comprises dans le domaine admissible de commande ($\mathcal{H}$), encadré par les limitations des trois actionneurs ($1, 3_1, 3_2$) et de la batterie (7).

13. Procédé de synthèse d'une loi de commande selon la revendication 11, **caractérisé en ce que** la compensation statique des saturations comprend une comparaison des signaux de commande effectifs (û) en entrée du système (G) avec les signaux de commande (u) délivrés par le régulateur (K), suivie d'une compensation par une méthode « anti-windup » basée sur l'optimisation d'une inégalité linéaire matricielle (LMI), permettant de calculer le signal de sortie d'un compensateur ($\Lambda$) destiné à corriger les états et les sorties du régulateur.

14. Procédé de synthèse d'une loi de commande selon la revendication 11, **caractérisé en ce qu'**il comprend une phase supplémentaire de prise en compte des limitations de l'état de charge de la batterie, comportant les étapes suivantes :

- génération de plusieurs régulateurs ($K_i$) pour différentes plages de fonctionnement et pour différents objectifs de commande ;
- connexion à un commutateur (C) qui sélectionne la sortie ($u_i$) du régulateur ($K_i$) devant commander le système (G) ;
- connexion dudit commutateur (C) à une fonction non linéaire (N) de saturation, dont la sortie (û) a subi une compensation statique optimisée par une inégalité linéaire matricielle, simultanément dans un compensateur ($\Lambda_i$) associé à chacun des régulateurs ($K_i$).

# FIG_1

EP 1 255 175 A1

IHM — $T_{pt}^{\lozenge}$

$T_{pt}^{*}$

13 — LGE — $E_v$

$T_{ice}^{*}$ — $\omega_{ice}^{*}$ — $T_{pt}^{*}$

REGULATEUR (CORG)

$T_{ice}^{\#}$ — $T_{e1}^{\#}$ — $T_{e2}^{\#}$

9 — CONTRÔLE — CONTRÔLE — 9 — 9 — CONTRÔLE — CONDUCTEUR

CAPTEUR — CAPTEUR — BATTERIE — 7 — CAPTEUR — 8 — 11

8 — 8 — $T_{e1}, \omega_{e1}$ — $T_{e2}, \omega_{e2}$ — 12

$3_1$ — $\underline{3}$ — $3_2$

$T_{ice}, \omega_{ice}$ — 5 — CHAINE CINEMATIQUE — 6 — $\omega_r, T_{res}$ — 2

1 — 4

## FIG_2

$G(\delta)$

$T_{pt}$

$V_c$

$\dot{\omega}_{ice}$ $\int$ $\omega_{ice}$

C O R G

$T_{e1}^{\#}$

$T_{e2}^{\#}$

$T_{ice}^{\#}$

$G_{ice}(\delta)$

$B_{tr}$

$\dot{\omega}_r$ $\int$ $\omega_r$

$T_{res}$

$G_{res}(\delta)$

## FIG_3

$r(t)$ + $e(t)$ $K(\delta)$ $u(t)$ $G(\delta)$ $d(t)$ + $y(t)$

$y_m(t)$ + $n(t)$

## FIG_9

$r$ + $e$ $K(\delta)$ $u$ $N$ $\hat{u}$ $G(\delta)$ $y$

$$\frac{1}{1+\tau_{ice}^{*\Delta}}$$

FIG_4

FIG_5

FIG_6

## FIG_7

$G_{tr}^{\Delta}(\delta)$

Te2
Te1
Tice
Tres

$B_{tr}$

$B_{tr}'$

$W^m$

$\Delta^m$

∫ → $\omega_{ice}$

∫ → $\omega_r$

## FIG_8

$G^{\Delta}(\delta)$

$V_C$ → Tpt

Te1 → $G_{e1}^{\Delta}(\delta)$

Te2 → $G_{e2}^{\Delta}(\delta)$

$T_{ice}^{\#}$ → $G_{ICE}^{\Delta}(\delta)$

$G_{tr}^{\Delta}(\delta)$ → $\omega_{ice}$

$\omega_r$

$T_{res}$

$G_{res}(\delta)$

$T_{ice}$

FIG_10A

FIG_10B

FIG_10C

FIG_10D

FIG_11

## FIG_12

## FIG_13

## FIG_14

**Office européen des brevets**

**RAPPORT DE RECHERCHE EUROPEENNE**

Numéro de la demande

EP 02 29 1060

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | S. SKOGESTAD, I. POSTLETHWAITE: "Multivariable Feedback Control - Analysis and Design" 1996 , JOHN WILEY & SONS , CHICHESTER, UK XP002190006 * page 362 - page 396 * * page 79 - page 84 * * page 55 - page 56 * * page 1 - page 14 * | 1-14 | G05B13/02 B60K6/04 B60L11/12 F16H61/00 B60K41/00 |
| Y | MASDING P W ET AL: "IDENTIFICATION AND PERFORMANCE SIMULATION OF A HYBRID I.C.-ENGINE/ BATTERY ELECTRIC AUTOMOTIVE POWER TRAIN. PART 1: THE I.C. ENGINE" TRANSACTIONS OF THE INSTITUTE OF MEASUREMENT AND CONTROL, INSTITUTE OF MEASUREMENT AND CONTROL. DORKING, GB, vol. 12, no. 1, 1990, pages 27-39, XP000102789 ISSN: 0142-3312 * le document en entier * | 1-14 | |
| Y | MASDING P W ET AL: "IDENTIFICATION AND PERFORMANCE SIMULATION OF A HYBRID I.C.-ENGINE/BATTERY ELECTRIC AUTOMOTIVE POWER TRAIN PART 2: THE ELECTRIC TRACTION SYSTEM" TRANSACTIONS OF THE INSTITUTE OF MEASUREMENT AND CONTROL, INSTITUTE OF MEASUREMENT AND CONTROL. DORKING, GB, vol. 12, no. 2, 1 avril 1990 (1990-04-01), pages 97-112, XP000125649 ISSN: 0142-3312 * le document en entier * | 1-14 | DOMAINES TECHNIQUES RECHERCHES (Int.Cl.7) G05B B60K B60L F16H |

-/--

Le présent rapport a été établi pour toutes les revendications

| Lieu de la recherche | Date d'achèvement de la recherche | Examinateur |
|---|---|---|
| LA HAYE | 25 juillet 2002 | Bufacchi, B |

**Office européen des brevets**

**RAPPORT DE RECHERCHE EUROPEENNE**

Numéro de la demande

EP 02 29 1060

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WAELTERMANN P: "MODELLING AND CONTROL OF THE LONGITUDINAL AND LATERAL DYNAMICS OF ASERIES HYBRID VEHICLE" PROCEEDINGS OF THE 1996 IEEE INTERNATIONAL CONFERENCE ON CONTROL APPLICATIONS (CCA). DEARBORN, SEPT. 15 - 18, 1996, PROCEEDINGS OF THE IEEE INTERNATIONAL CONFERENCE ON CONTROL APPLICATIONS (CCA), NEW YORK, IEEE, US, vol. CONF. 5, 15 septembre 1996 (1996-09-15), pages 191-198, XP000741868 ISBN: 0-7803-2976-7 * figure 4 * | 1-14 | |
| A | FR 2 783 763 A (RENAULT) 31 mars 2000 (2000-03-31) * revendications * | 1-14 | |
| A | EP 1 092 583 A (RENAULT) 18 avril 2001 (2001-04-18) * le document en entier * | 1-14 | DOMAINES TECHNIQUES RECHERCHES (Int.Cl.7) |
| A | DE 43 33 146 A (FUJI ELECTRIC CO LTD) 31 mars 1994 (1994-03-31) * page 1, ligne 1 - page 2, ligne 11 * | 1-14 | |
| A | WAELTERMANN P ET AL: "DER ENTWURF EINES HYBRIDFAHRZEUGS IM SINNE EINES MECHATRONISCHEN SYSTEMS" AUTOMATISIERUNGSTECHNIK - AT, OLDENBOURG VERLAG. MUNCHEN, DE, vol. 44, no. 7, juin 1996 (1996-06), pages 338-344, XP000997029 ISSN: 0178-2312 * le document en entier * | 1-14 | |

--/--

Le présent rapport a été établi pour toutes les revendications

| Lieu de la recherche | Date d'achèvement de la recherche | Examinateur |
|---|---|---|
| LA HAYE | 25 juillet 2002 | Bufacchi, B |

**Office européen des brevets**

## RAPPORT DE RECHERCHE EUROPEENNE

Numéro de la demande

EP 02 29 1060

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | BUTLER K L ET AL: "A MATLAB-BASED MODELING AND SIMULATION PACKAGE FOR ELECTRIC AND HYBRID ELECTRIC VEHICLE DESIGN" IEEE TRANSACTIONS ON VEHICULAR TECHNOLOGY, IEEE INC. NEW YORK, US, vol. 48, no. 6, novembre 1999 (1999-11), pages 1770-1778, XP000928368 ISSN: 0018-9545 * le document en entier * | 1-14 | |
| A | BUNTIN D L ET AL: "A SWITCHING LOGIC CONTROLLER FOR A HYBRID ELECTRIC/ICE VEHICLE" PROCEEDINGS OF THE AMERICAN CONTROL CONFERENCE (ACC). SEATTLE, JUNE 21 - 23, 1995, NEW YORK, 1995, US, vol. 2, 21 juin 1995 (1995-06-21), pages 1169-1175, XP000590450 ISBN: 0-7803-2446-3 * le document en entier * | 1-14 | |
| A | GUZZELLA L ET AL: "CAE TOOLS FOR QUASI-STATIC MODELING AND OPTIMIZATION OF HYBRID POWERTRAINS" IEEE TRANSACTIONS ON VEHICULAR TECHNOLOGY, IEEE INC. NEW YORK, US, vol. 48, no. 6, novembre 1999 (1999-11), pages 1762-1769, XP000928367 ISSN: 0018-9545 * le document en entier * | 1-14 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 25 juillet 2002 | Bufacchi, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 1060

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-07-2002

| Document brevet cité au rapport de recherche | | Date de publication | Membre(s) de la famille de brevet(s) | | Date de publication |
|---|---|---|---|---|---|
| FR 2783763 | A | 31-03-2000 | FR | 2783763 A1 | 31-03-2000 |
| EP 1092583 | A | 18-04-2001 | FR | 2799418 A1 | 13-04-2001 |
| | | | EP | 1092583 A1 | 18-04-2001 |
| DE 4333146 | A | 31-03-1994 | JP | 6113578 A | 22-04-1994 |
| | | | DE | 4333146 A1 | 31-03-1994 |

EPO FORM P0460

Pour tout renseignement concernant cette annexe : voir Journal Officiel de l'Office européen des brevets, No.12/82